# EUROPÄISCHE PATENTSCHRIFT

(11) **EP 1 472 819 B1**
(45) Veröffentlichungstag und Bekanntmachung des Hinweises auf die Patenterteilung: **26.07.2006**
(21) Anmeldenummer: 03702572.3
(22) Anmeldetag: 30.01.2003
(51) Int. Cl.: H04L 12/24

(54) **Nachrichtenanalyseeinrichtung und Verfahren zum Anzeigen von Nachrichten**
MESSAGE ANALYSIS DEVICE AND METHOD FOR DISPLAYING MESSAGES
Dispositif d'analyse de messages et procédé d'affichage de messages

(30) Priorität: 05.02.2002 DE 10204657
(43) Veröffentlichungstag der Anmeldung: 03.11.2004
(73) Patentinhaber: Rohde & Schwarz GmbH & Co. KG, 81671 München (DE)
(72) Erfinder: MICHL, Andreas, 81673 München (DE); LANG, Thomas, 85238 Petershausen (DE); SANDHÄGER, Stephan, 82110 Germering (DE); Roth, Michael, 85521 Ottobrunn (DE)
(74) Vertreter: Körfer, Thomas
(86) Internationale Anmeldenummer: PCT/EP2003/000946
(87) Internationale Veröffentlichungsnummer: WO 2003/067815

(56) Entgegenhaltungen:
- US-A- 6 049 666
- HOOD, EARL: "Mhonarc" , [Online] 31. Januar 1997 (1997-01-31), Seiten 1-53, XP002244692 Gefunden im Internet: <URL:http://www.mhonarc.org/> [gefunden am 2003-06-18]

## Beschreibung

Die Erfindung betrifft eine Nachrichtenanalyseeinrichtung sowie ein Verfahren zum Anzeigen ursächlich zusammengehöriger Nachrichten.

Bei der Entwicklung neuer Geräte bzw. Software-Generationen für bestehende Geräte ist es notwendig, die Ergebnisse der Entwicklung anhand des Nachrichtenflusses zu überprüfen. Aus den dadurch gewonnenen Erkenntnissen können Rückschlüsse auf fehlerhafte Entwicklungen gezogen werden oder mögliche Verbesserungen angeregt werden. Um eine Analyse des Nachrichtenflusses zu ermöglichen ist es üblich, die z.B. in einem Endsystem eines Kommunikationssystems wie dem Mobilfunk auftretenden Nachrichten in einer Datei zu speichern. Bei einem beispielsweise nach dem OSI-Referenzmodell aufgebauten Endsystem werden dabei zwischen verschiedenen Schichten des Referenzmodells aufgrund erbrachter Dienste Nachrichten erzeugt. Diese Nachrichten werden entweder direkt von den Schichten in die Datei geschrieben oder mittels eines eigens hierzu vorgesehenen sogenannten "Frameworks".

Bezüglich des OSI-Referenzmodells sei beispielsweise auf Jürgen Göbel, "Kommunikationstechnik", ISBN 3-7785-3904-3, 1999, Teil I, Seiten 713-753 verwiesen.

Aus der Dokumentation von Earl Hood über den 'Mhonarc' E-mail-zu-HTML Konverter sind Darstellungsmöglichkeiten bekannt, in der z.B. E-Mails der Eltern- und/oder Kindergeneration zu einer ausgewählten E-Mail angezeigt werden.

Aufgrund der beschriebenen Vorgehensweise sind die Nachrichten in chronologischer Reihenfolge in der Datei angeordnet. Mit Hilfe eines Analysators ist es möglich, eine so erzeugte Datei anzuschauen. Die in der Datei gespeicherten Nachrichten werden in Tabellenform dargestellt und können durch einen Entwickler analysiert werden.

Nachteilig an dem beschriebenen System ist, daß die tabellarische Auflistung der einzelnen Nachrichten keinen Einblick in die kausalen Zusammenhänge der Nachrichten gewährt. Somit ist es für einen Entwickler äußerst schwierig, den Nachrichtenfluß zu analysieren, da er selbst inhaltlich zusammengehörige Nachrichten suchen muß. Bei der Vielzahl von Nachrichten, die in einer solchen Datei abgelegt sind, führt dies zu einem erheblichen Zeit- und damit auch Kostenaufwand.

Es ist Aufgabe der Erfindung eine Nachrichtenanalyseeinrichtung sowie ein Verfahren zum Anzeigen von Nachrichten zu schaffen, mit dem der Nachrichtenfluß kausal zusammengehöriger Nachrichten einfach zu analysieren ist, sowie ein entsprechendes Computerprogramm und Computerprogramm-Produkt anzugeben.

Die Aufgabe wird durch die erfindungsgemäße Nachrichtenanalyseeinrichtung nach Anspruch 1 sowie das Verfahren zur Anzeige von ursächlich zusammengehörigen Nachrichten nach Anspruch 7 gelöst. Die Ansprüche 13 und 14 betreffen ein entsprechendes Computerprogramm, während Anspruch 15 ein entsprechendes Computerprogramm-Produkt betrifft. Mit den in den Unteransprüchen aufgeführten Maßnahmen ergeben sich vorteilhafte Weiterbildungen der Erfindung.

Bei der erfindungsgemäßen Nachrichtenanalyseeinrichtung sowie dem Verfahren zur Anzeige zusammengehöriger Nachrichten ist es vorteilhaft, daß zusammen mit der Nachricht in der Datei abgelegte Informationen dazu verwendet werden, mehrere Nachrichten auszuwählen, die in einem kausalen Zusammenhang miteinander stehen. Auf diese Weise ist es möglich, mit einem Blick zu erfassen, welche weitere Nachrichten mit einer bestimmten Nachricht zusammenhängen, weil sie beispielsweise als Folge der bestimmten Nachricht erzeugt wurden. Hinsichtlich der Zeitskala ist eine solche Vorgehensweise in beide Richtungen möglich, so daß nicht nur nachfolgende, aufgrund einer bestimmten Nachricht erzeugte Nachrichten angezeigt werden können, sondern ebenfalls der bestimmten Nachricht vorausgegangene Nachrichten angezeigt werden.

Besonders vorteilhaft ist gemäß einer Weiterbildung der Erfindung, daß neben der unmittelbar der bestimmten Nachricht vorausgehender und nachfolgender Nachrichten, welche als Nachrichten der Elterngeneration bzw. der Kindgeneration bezeichnet werden, die wiederum vorangegangenen bzw. nachfolgenden Nachrichten angezeigt, werden können. Durch die Rückkopplung der so dargestellten Generationen von Nachrichten ist es weiterhin vorteilhaft, daß bei einer Auswahl einer, bestimmten weiteren Nachricht für die Darstellung der chronologischen Auflistung von Nachrichten diejenige Sequenz ausgewählt wird, die die bestimmte weitere Nachricht enthält. Somit kann nicht nur zu der Abfolge von Nachrichten, die einen kausalen Zusammenhang aufweisen, sondern auch zu den einzelnen, kausal zusammenhängenden Nachrichten eine Detailanalyse vorgenommen werden.

Ein bevorzugtes Ausführungsbeispiel der Erfindung ist in den Zeichnungen dargestellt und wird anhand der nachfolgenden Beschreibung näher erläutert. Es zeigen:
- Fig. 1: eine schematische Darstellung der Struktur einer Nachricht mit modularem Aufbau;
- Fig. 2: eine zeitliche Abfolge mehrerer Generationen von Nachrichten;
- Fig. 3: eine Darstellung einer ersten Bildschirmansicht mit Nachrichten einer Eltern- und einer Kindgeneration;
- Fig. 4: eine zweite Darstellung einer Bildschirmansicht mit Nachrichten einer Eltern- und einer Kindgeneration;
- Fig. 5: eine Darstellung einer Bildschirmansicht mit Nachrichten einer Kindgeneration sowie Nachrichten einer nachfolgenden Generation;
- Fig. 6: eine Darstellung einer Bildschirmansicht mit einer Nachricht einer Elterngeneration sowie einer der Elterngeneration vorausgegangenen Generation; und
- Fig. 7: ein Blockschaltbild der erfindungsgemäßen Nachrichtenanalyseeinrichtung.

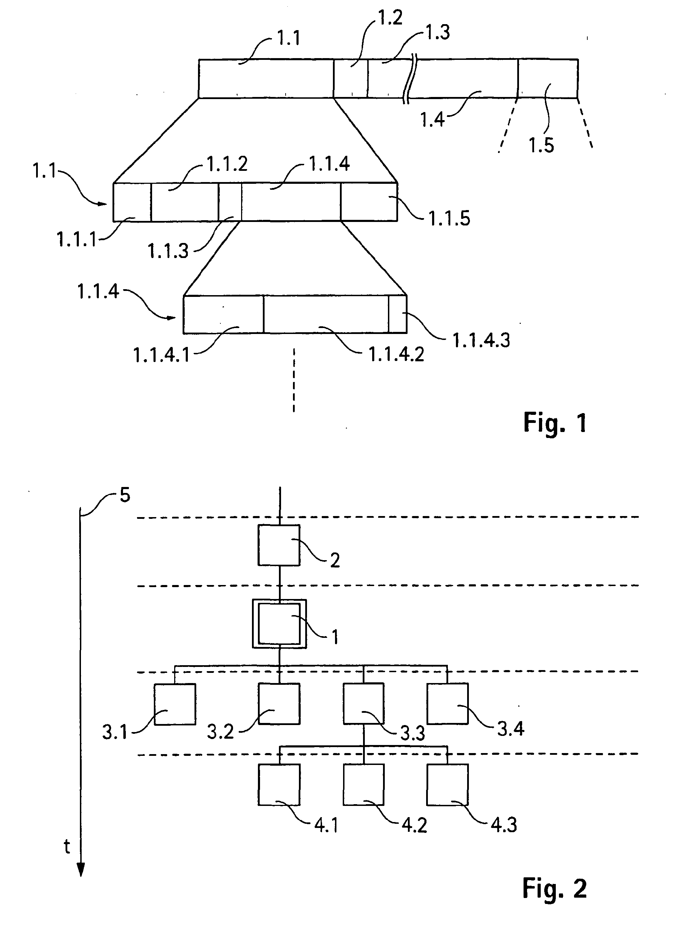

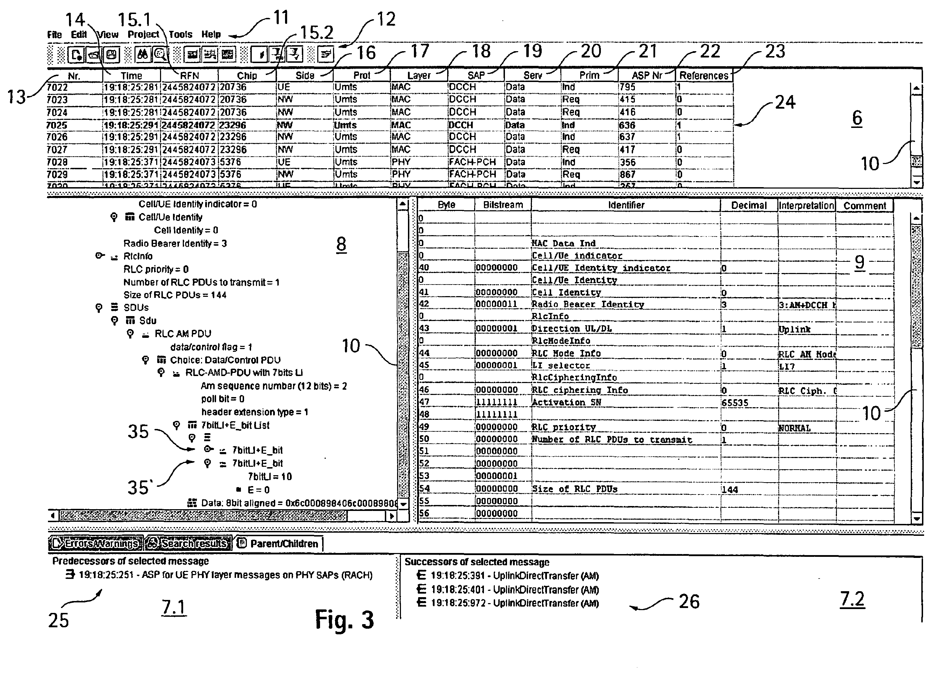

Bevor ein Beispiel für eine erfindungsgemäße Nachrichtenanalyseeinrichtung anhand Fig. 3 bis 6 erläutert wird, soll zum besseren Verständnis zunächst die Struktur modular aufgebauter Nachrichten anhand Fig. 1 erläutert werden.

Eine Nachricht 1, wie sie beispielsweise bei der Diensterbringung durch eine der Schichten nach dem OSI-Referenzmodell generiert wird, besteht aus mehreren Segmenten, die in Fig. 1 mit 1.1, 1.2, 1.3, 1.4 und 1.5 bezeichnet werden. Für das erste Segment 1.1 ist eine weitere Aufsplittung in Blöcke 1.1.1, 1.1.2, 1.1.3, 1.1.4 und 1.1.5 dargestellt. Die übrigen Segmente der vollständigen Nachricht 1 können ebenfalls in solche Blöcke aufgeteilt sein. Die einzelnen Blöcke des Segments 1.1 der Nachricht 1 können ebenfalls wiederum in kleinere Einheiten 1.1.4.1, 1.1.4.2 und 1.1.4.3 aufgegliedert werden. Aufgrund der dargestellten Aufgliederung in immer kleinere Informationseinheiten entsteht ein hierarchisches System einer Nachricht 1, das deren modularen Aufbau wiederspiegelt. Die durch die vorliegende Erfindung zu analysierenden Nachrichten 1 weisen einen solchen modularen Aufbau auf, wobei die Zusammenfassung einzelner Module zu übergeordneten Strukturen aufgrund einer logischen Zusammengehörigkeit von Modulen vorgenommen wird. Die Nachrichten 1 stellen beispielsweise Elemente eines Datenstroms dar, der zwischen einer Basisstation und einer Mobilfunkstation in einem zellulären Mobilfunknetz ausgetauscht wird.

In Fig. 2 ist ausgehend von einer bestimmten Nachricht 1 ein Nachrichtenfluß über mehrere Generationen dargestellt. Der Nachricht 1 ist eine Nachricht 2 einer Elterngeneration vorausgegangen. Die bestimmte Nachricht 1 selbst ist aufgrund des Inhalts der Nachricht 2 der Elterngeneration ausgelöst worden. Wie durch die Verbindungslinien dargestellt, ist die Nachricht 1 wiederum die Ursache für die Auslösung weiterer Nachrichten 3.1, 3.2, 3.3 und 3.4, welche einer Kindgeneration angehören. Die Nachrichten 3.1 bis 3.4 der Kindgeneration, können ihrerseits wiederum ursächlich verantwortlich sein für das Auslösen weiterer Nachrichten 4.1, 4.2 und 4.3, wie dies beispielhaft für die Nachricht 3.3 der Kindgeneration dargestellt ist.

Durch die Gruppierung der einzelnen Nachrichten, welche bezüglich der Generationenfolge in einem kausalem Zusammenhang stehen, ergibt sich eine zeitliche Abfolge der Nachrichten, welche mittels einer Zeitachse 5 angedeutet ist. Die in der Darstellung gleichzeitig angeordneten Nachrichten 3.1, 3.2, 3.3 und 3.4 der Kindgeneration bzw. die nachfolgenden Nachrichten 4.1, 4.2 und 4.3 sind in der Datei jedoch nacheinander aufgelistet. Dementsprechend werden auch die Einträge in einer tabellarischen Übersicht nacheinander angezeigt. Zwischen den einzelnen Nachrichten der verschiedenen Generationen, die in Fig. 2 dargestellt sind, ist eine Vielzahl anderer Nachrichten in der Datei abgelegt. Das zeitliche Zusammentreffen solcher Nachrichten ist weitgehend zufällig, so daß aufgrund der Vielzahl innerhalb kürzester Zeit erzeugten Nachrichten der kausale Zusammenhang zwischen einzelnen Nachrichten in der chronologischen Auflistung nicht erkennbar ist.

In Fig. 3 ist eine Darstellung einer Bildschirmansicht der Nachrichtenanalyseeinrichtung gezeigt. In der Bildschirmdarstellung ist ein erstes Fenster 6 erkennbar, in dem eine Vielzahl von Nachrichten entsprechend ihrer chronologischen Reihenfolge, die der Reihenfolge der Einträge in der Datei entspricht, aufgelistet sind. Durch Auswahl einer Nachricht mittels eines geeigneten Auswahlmediums, z.B. einer Computermaus, wird eine bestimmte Nachricht 24 in der tabellarischen Auflistung hervorgehoben. Die durch Fettdruck markierte Nachricht 24 entspricht der Nachricht 1 aus Fig. 2. Geht der bestimmten Nachricht 24 eine Nachricht voraus, aufgrund derer die bestimmte Nachricht 24 entstanden ist, so wird diese vorausgehende Nachricht, die als eine Nachricht 25 der Elterngeneration bezeichnet wird, in einem zweiten Fenster 7 angezeigt. Das zweite Fenster 7 gliedert sich dabei in einen ersten Bereich 7.1 und einen zweiten Bereich 7.2. Die Anzeige der Nachricht 25 der Elterngeneration erfolgt dabei in dem ersten Bereich 7.1.

Sind aufgrund der bestimmten Nachricht 24 nachfolgende Nachrichten ausgelöst worden, so werden diese in dem zweiten Bereich 7.2 dargestellt. Im dargestellten Fallbeispiel ging der bestimmten Nachricht 24 die Nachricht 25 voraus. Aufgrund der bestimmten Nachricht 24 wurden drei weitere Nachrichten 26 erzeugt, welche in dem zweiten Bereich 7.2 des zweiten Fensters 7 dargestellt sind. Wie in Fig. 3 anhand von Zeiteinträgen 26.1 der Nachrichten 26 der Kindgeneration zu erkennen ist, entstehen die drei zu der Kindgeneration gehörigen Nachrichten 26 nicht zeitgleich, so daß mit hoher Wahrscheinlichkeit in der Auflistung der drei Nachrichten 26 der Kindgeneration in der Datei eine Vielzahl von weiteren Nachrichten zwischen den Nachrichten 26 aufgelistet ist.

Die in dem ersten Fenster 6 angezeigten Spalten der Tabelle sind über ein nicht dargestelltes Auswahlmenü einstellbar. Im dargestellten Beispiel wird in einer ersten Spalte 13 die laufende Nummer der jeweiligen Nachricht in der Datei angezeigt. In einer zweiten Spalte 14 wird eine Realzeit angezeigt, zu der die entsprechende Nachricht in der Datei abgelegt wurde. In zwei weiteren Spalten 15.1 und 15.2 ist die Zeit als interne Zeit, also als Systemzeit abgelegt. Eine fünfte Spalte 16 kennzeichnet die Seite, von der die Nachricht abgeschickt wurde, also beispielsweise Basisstation oder Mobiltelefon. Da die Nachrichtenanalyseeinrichtung nicht an ein bestimmtes Protokollsystem gebunden ist, wird in einer sechsten Spalte 17 das jeweils zugrundeliegende Protokoll genannt. Die Spalten mit den Bezugszeichen 18 bis 21 enthalten Informationen, welche sich durch den schichtweisen Aufbau des Endsystems gemäß dem OSI-Referenzmodell ergeben. In einer weiteren Spalte 22 ist eine ASP-Nummer vermerkt, mit deren Hilfe sich die Nachrichten kategorisieren lassen, die also eine nicht eindeutige Identifizierung einer einzelnen Nachricht erlaubt. In einer letzten dargestellten Spalte 23 ist unter dem Titel "References" ein Eintrag vorgesehen, mit dem bestimmt werden kann, ob der Nachricht eine die Nachricht auslösende Nachricht vorausgegangen ist.

Die in dem ersten Fenster 6 dargestellte Abfolgeansicht von Nachrichten enthält die Informationen des Nachrichtenkopfs, des sogenannten Headers, wobei, wie bereits angegeben, die dargestellten Informationen über ein nicht dargestelltes Auswahlfenster eingestellt werden können. Für die jeweils in dem ersten Fenster 6 markierte Nachricht 24 ist in einem dritten Fenster 8 eine Strukturdarstellung angezeigt. Die einzelnen hierarchischen Ebenen, die bereits zu Fig. 1 angesprochen wurden, sind in der Strukturdarstellung durch Einrückungen kenntlich gemacht. Sollen für ein bestimmtes Element die hierarchisch untergeordneten Ebenen ein- oder ausgeblendet werden, so kann dies durch Anklicken des entsprechenden Elements in der Darstellung ausgeführt werden. In Fig. 3 ist unter Bezugszeichen 35 ein solches Element ohne Darstellung der untergeordneten hierarchischen Ebenen sowie ein identisch aufgebautes Element 35' mit Darstellung aller untergeordneten hierarchischen Ebenen angezeigt.

In einem vierten Fenster 9 ist eine Detailansicht der markierten Nachricht 24 dargestellt. Geht die darzustellende Information über den sichtbaren Bereich des vierten Fensters 9 hinaus, so ist auf bekannte Weise mittels einer Bildlaufleiste 10 der dargestellte sichtbare Ausschnitt zu variieren. Dies trifft analog für die übrigen Fenster 6, 7 und 8 zu.

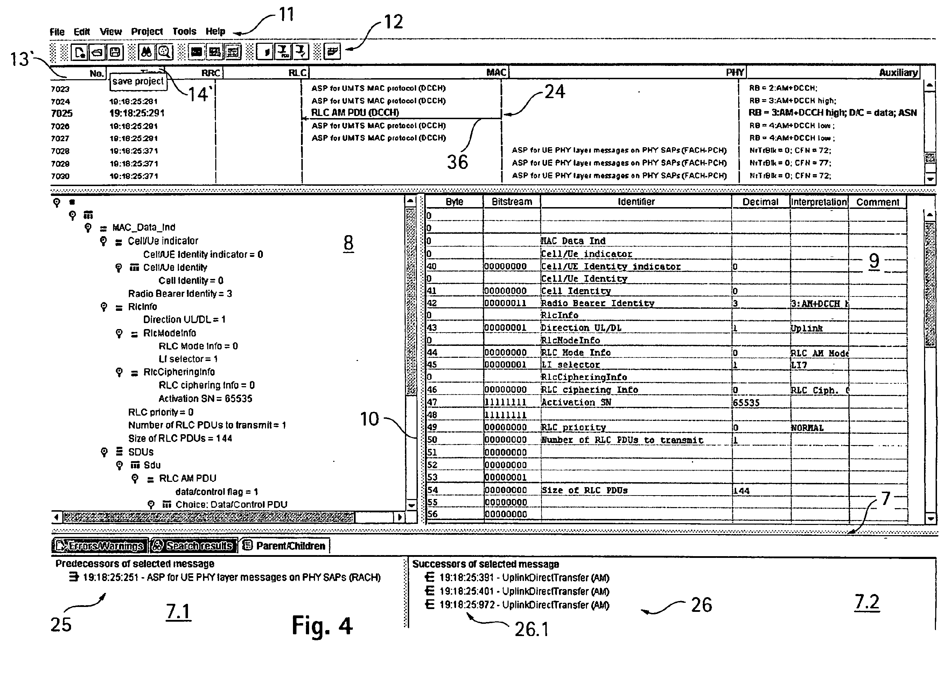

In Fig. 4 ist eine alternative Darstellungsform der chronologischen Auflistung der Nachrichten in dem ersten Fenster 6 gezeigt. Die Nachrichten sind wiederum zeilenweise aufgelistet, jedoch ist anders als bei der tabellarischen Darstellung aus Fig. 3 Ursprung und Ziel der einzelnen Nachrichten graphisch dargestellt. Neben den beiden ersten Spalten 13' und 14', welche den zuvor besprochenen Spalten 13 und 14 in Fig. 3 entsprechen, sind weitere Spalten dargestellt, welche mit "RRC", "RLC", "MAC", "PHY" und "Auxiliary" bezeichnet sind. Durch die entsprechende Anordnung der Information einer Nachricht in der entsprechenden Spalte, für die markierte Nachricht 24 also die Spalte "MAC", wird unmittelbar graphisch diejenige Schicht verdeutlicht, in welcher die Nachricht generiert wird. Zusammen mit dem darunter angeordneten Richtungspfeil 36 ist auch das Ziel der jeweiligen Nachricht erkennbar. In der Spalte "Auxiliary" sind dagegen zusätzliche Informationen enthalten. Die in dem dritten Fenster angezeigte Information zur Struktur der Nachricht 24 unterscheidet sich von Fig.3 durch den mittels Bildlaufleiste 10 verschobenen Bereich der Darstellung.

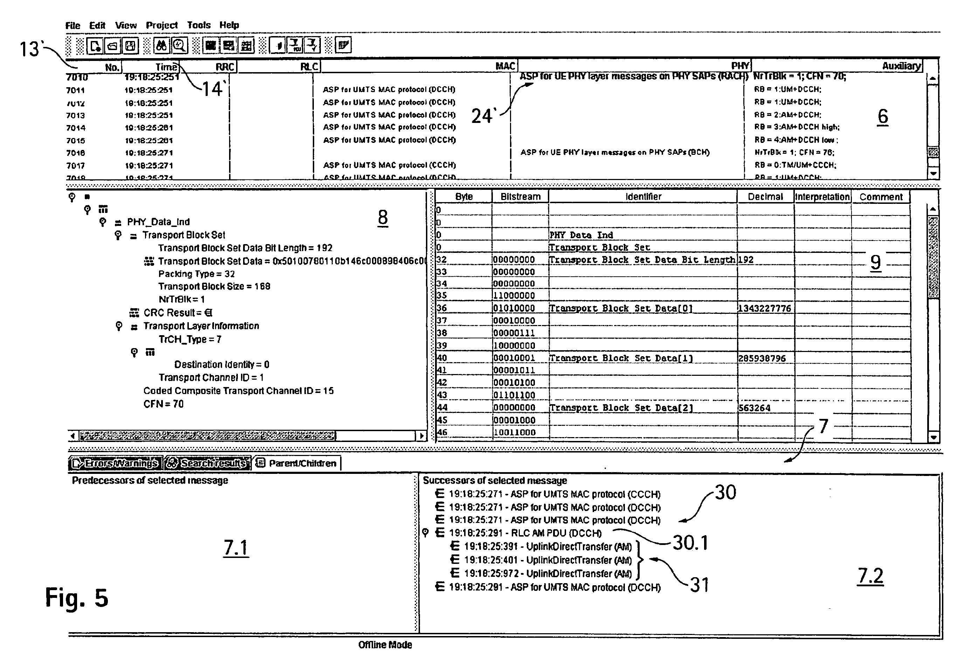

Fig. 5 zeigt eine weitere Darstellung für den Fall, daß die markierte Nachricht 24' neben mehreren Nachrichten 30 der Kindgeneration, die in dem zweiten Bereich 7.2 des zweiten Fensters 7 angezeigt werden, noch weitere Nachrichten einer nachfolgenden Generation enthält, die aufgrund einer Nachricht 30.1 der Kindgeneration ausgelöst wurden. Optisch ist dies durch die eingerückte Darstellung in dem zweiten Bereich 7.2 kenntlich gemacht.

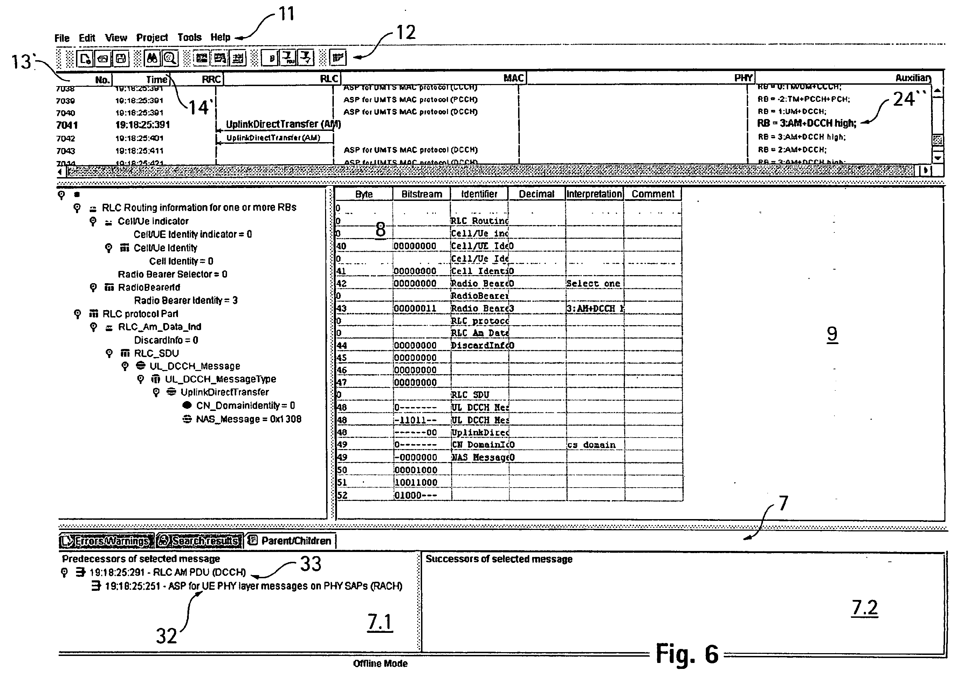

In Fig. 6 ist der analoge Fall für mehrere Generationen vorausgegangener Nachrichten dargestellt, so daß eine der markierten Nachricht 24'' vorausgegangene Nachricht 32 der Elterngeneration wiederum von einer Nachricht 33 der der Elterngeneration vorangegangenen Generation ausgelöst wurde.

Zur Auswahl von Nachrichten, die in der beschriebenen Weise einen kausalen Zusammenhang mit einer bestimmten Nachricht 24, 24' oder 24'' aufweisen, die in dem ersten Fenster 6 markiert ist, werden die Header-Informationen ausgewertet. In den Header sind bei der Ablage der jeweiligen Nachricht in der Datei Einträge vorgenommen worden, mittels derer sich der kausale Zusammenhang und damit die Historie der einzelnen Nachrichten rekonstruieren läßt. Durch eine Auswahlvorrichtung werden die aufgrund der Informationen des Headers identifizierten Nachrichten von Eltern- oder Kindgenerationen ausgewählt und in dem zweiten Fenster 7 in dem ersten oder zweiten Bereich 7.1 oder 7.2 dargestellt, abhängig davon, ob es sich bei der jeweiligen Nachricht um eine Nachricht einer vorausgegangenen oder nachfolgenden Generation handelt.

Wird in dem zweiten Fenster 7 mittels eines Auswahlmediums eine Nachricht der Eltern oder der Kindgeneration oder anderer dort dargestellter Informationen ausgewählt, so wird in dem ersten Fenster 6 automatisch derjenige Teil der chronologischen Auflistung von Nachrichten dargestellt, der die neu ausgewählte Nachricht enthält. Die neu ausgewählte Nachricht wird in dem ersten Fenster 6 daraufhin markiert. Entsprechend der neu markierten Nachricht des ersten Fensters werden die Darstellungen in den übrigen Fenstern 7, 8 und 9 aktualisiert.

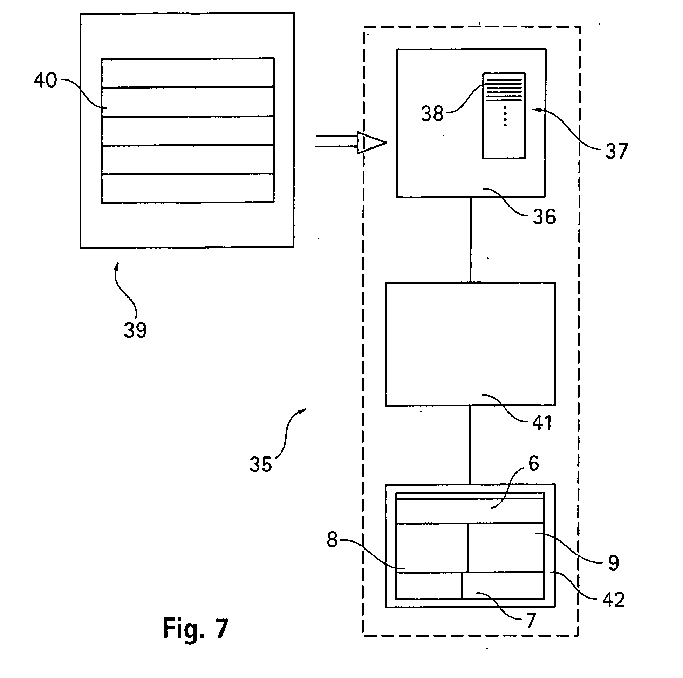

Fig. 7 zeigt den Gesamtaufbau der erfindungsgemäßen Nachrichtenanalyseeinrichtung. Die Nachrichtenanalyseeinrichtung umfaßt eine Speichervorrichtung 36, in der eine Datei 37 abgelegt ist, in der wiederum die Nachrichten 38 in chronologischer Reihenfolge abgelegt sind. Die Nachrichten 38 werden über eine nicht dargestellte Schnittstelle von dem Endsystem 39, welches z.B. die sieben Schichten 40 des OSI-Referenzmodells umfaßt, in der Datei 37 abgelegt. Weiterhin weist die Nachrichtenanalyseeinrichtung 35 eine Auswahlvorrichtung 41 auf, welche mit der Speichervorrichtung 36 verbunden ist, so daß die Auswahlvorrichtung 41 auf die Datei 37 der Speichervorrichtung 36 zugreifen kann. Entsprechend dem vorstehend beschriebenen Auswahlkriterium wird von der Auswahlvorrichtung 41 eine Auswahl darzustellender Nachrichten aus der Datei 37 durchgeführt, die einer bestimmten Nachricht, die in dem ersten Fenster 6 der Darstellungseinrichtung 42 markiert ist, vorausgegangen oder nachgefolgt sind und an die Darstellungseinrichtung 42 ausgegeben. Entsprechend der von der Auswahlvorrichtung 41 an die Darstellungseinrichtung 42 übergebenen Information erfolgt eine Darstellung in dem zweiten Fenster 7, wie bei der Beschreibung der Fig. 3 bis 6 bereits erläutert.

## Patentansprüche

1. Nachrichtenanalyseeinrichtung (35) zum Analysieren ursächlich zusammengehöriger, modular aufgebauter Nachrichten aus einer Menge von Nachrichten eines Datenstroms, wobei die Nachrichtenanalyseeinrichtung (35) eine Speichervorrichtung (36) zur Speicherung von Nachrichten umfaßt und die Nachrichten in einer Datei (37) der Speichervorrichtung (36) in chronologischer Reihenfolge gespeichert sind,
wobei die Nachrichtenanalyseeinrichtung (35) eine Darstellungseinrichtung (42) zum Anzeigen zumindest eines ersten, eines zweiten Fensters und eines dritten Fensters (6, 7, 8) umfaßt und in dem ersten Fenster (6) ein Teil der chronologisch in der Datei gespeicherten Nachrichten dargestellt ist und
wobei die Nachrichtenanalyseeinrichtung eine Auswahlvorrichtung (41) zur Auswahl zumindest einer in einem ersten Bereich (7.1) des zweiten Fensters (7) der Darstellungseinrichtung (42) anzuzeigenden Nachricht (25) einer Elterngeneration und einer in einem zweiten Bereich (7.2) des zweiten Fensters (7) anzuzeigenden Nachricht (26) einer Kindgeneration einer bestimmten Nachricht (24, 24', 24'') umfaßt, wobei die bestimmte Nachricht (24, 24', 24'') durch die Nachricht (25) der Elterngeneration kausal ausgelöst ist und ihrerseits die Nachricht (26) der Kindgeneration kausal auslöst und in dem ersten Fenster (6) markiert dargestellt ist und in dem dritten Fenster (8) gleichzeitig ein hierarchisches System der bestimmten Nachricht (24, 24', 24'') angezeigt ist,
wobei es sich bei der Darstellung des hierarchischen Systems einer Nachricht um den inneren, modularen Aufbau einer Nachricht handelt.

2. Nachrichtenanalyseeinrichtung nach Anspruch 1,
**dadurch gekennzeichnet,**
**daß** durch die Auswahlvorrichtung (41) zusätzlich zu einer Nachricht (30.1) der Kindgeneration zumindest eine Nachricht (31) der der Kindergeneration nachfolgenden Generation auswählbar ist, die durch die Nachricht (30.1) der Kindergeneration kausal ausgelöst ist.

3. Nachrichtenanalyseeinrichtung nach Anspruch 1 oder 2,
**dadurch gekennzeichnet,**
**daß** durch die Auswahlvorrichtung (41) zusätzlich zu einer Nachricht (32) der Elterngeneration zumindest eine Nachricht (33) der der Elterngeneration vorausgegangenen Generation auswählbar ist, die eine kausal auslösende Nachricht (33) für die Nachricht (32) der Elterngeneration ist.

4. Nachrichtenanalyseeinrichtung nach Anspruch 2 oder 3,
**dadurch gekennzeichnet,**
**daß** zum Anzeigen der Zugehörigkeit der Nachrichten (33, 30, 30.1) zu ihrer jeweiligen Generation die Nachrichten (32, 31) nachfolgender Generationen eingerückt dargestellt sind.

5. Nachrichtenanalyseeinrichtung nach einem der Ansprüche 1 bis 4,
**dadurch gekennzeichnet,**
**daß** bei einer Selektion einer in dem zweiten Fenster (7) dargestellten Nachricht (25, 26, 30, 30.1, 31, 32, 33) derjenige Abschnitt von chronologischen Nachrichten der Datei in dem ersten Fenster (6) dargestellt ist, der die ausgewählte Nachricht (25, 26, 30, 30.1, 31, 32, 33) enthält.

6. Nachrichtenanalyseeinrichtung nach Anspruch 5,
**dadurch gekennzeichnet,**
**daß** die ausgewählte Nachricht (25, 26, 30, 30.1, 31, 32, 33) durch die Auswahlvorrichtung (41) als neue, bestimmte Nachricht interpretierbar ist und die Darstellung in dem zweiten Fenster (7) entsprechend aktualisierbar ist.

7. Verfahren zur Analyse von ursächlich zusammengehörigen, modular aufgebauten Nachrichten eines Datenstroms, die in einer Datei gespeichert sind, wobei die Nachrichten entsprechend ihrer zeitlichen Abfolge in der Datei gespeichert sind, mit folgenden Verfahrensschritten unter Verwendung eines Computers oder digitalen Signalprozessors:
- Markieren einer ausgewählten Nachricht (24, 24', 24'') in einem ersten Fenster (6), in dem die Nachrichten in chronologischer Reihenfolge aufgelistet sind;
- Auswerten von Header-Informationen der markierten Nachricht (24, 24', 24'') und Feststellen, ob zu der markierten Nachricht (24, 24', 24'') zumindest eine Nachricht (25) einer Elterngeneration existiert, die die markierte Nachricht (24, 24', 24'') kausal ausgelöst hat, und ob zumindest eine Nachricht (26) einer Kindgeneration existiert, die durch die markierte Nachricht (24, 24', 24'') kausal ausgelöst wurde; und
- Anzeigen einer solchen Nachricht (25, 26) der Elterngeneration in einem ersten Bereich (7.1) eines zweiten Fensters (7) und einer solchen Nachricht der Kindgeneration in einem zweiten Bereich (7.2) des zweiten Fensters (7) und gleichzeitig
- Darstellen eines hierarchischen Systems der markierten Nachricht (24, 24', 24'') in einem dritten Fenster (8),
wobei es sich bei der Darstellung des hierarchischen Systems einer Nachricht um den inneren, modularen Aufbau einer Nachricht handelt.

8. Verfahren nach Anspruch 7,
**dadurch gekennzeichnet,**
**daß** zusätzlich zu einer angezeigten Nachricht (30.1) der Kindgeneration zumindest eine Nachricht (31) der der Kindgeneration nachfolgenden Generation angezeigt wird, die mit der angezeigten Nachricht (30.1) der Kindgeneration in einem ursächlichen Zusammenhang steht.

9. Verfahren nach Anspruch 7 oder 8,
**dadurch gekennzeichnet,**
**daß** zusätzlich zu einer angezeigten Nachricht der Elterngeneration (32) zumindest eine Nachricht (33) der der Elterngeneration vorangegangenen Generation angezeigt wird, die mit der angezeigten Nachricht (32) in einem ursächlichen Zusammenhang steht.

10. Verfahren nach Anspruch 8 oder 9,
**dadurch gekennzeichnet,**
**daß** die in dem zweiten Fenster (7) angezeigten Nachrichten (31, 32) einer nachfolgenden Generation bezüglich den Nachrichten (30.1, 33) der vorausgegangenen Generation kenntlich gemacht wird, insbesondere durch eingerückte Darstellung der Nachrichten der nachfolgenden Generation (31, 32).

11. Verfahren nach einem der Ansprüche 7 bis 10,
**dadurch gekennzeichnet,**
**daß** bei Selektierung einer der in dem zweiten Fenster (7) angezeigten Nachrichten (25, 26, 30, 30.1, 31, 32, 33) in dem ersten Fenster (6) ein solcher Teil der chronologischen Abfolge von Nachrichten angezeigt wird, der die in dem zweiten Fenster (7) ausgewählte Nachricht (25, 26, 30, 30.1, 31, 32, 33) enthält und die ausgewählte Nachricht (25, 26, 30, 30.1, 31, 32, 33) in dem ersten Fenster (6) markiert wird.

12. Verfahren nach einem der Ansprüche 7 bis 11,
**dadurch gekennzeichnet,**
**daß** die Verfahrensschritte bei einem Wechsel der markierten Nachricht (24, 24', 24'') in dem ersten Fenster (6) wiederholt werden.

13. Computerprogramm mit Programmcode-Mitteln, um alle Schritte gemäß einem der Ansprüche 7 bis 12 durchführen zu können, wenn das Programm auf einem Computer oder einem digitalen Signalprozessor ausgeführt wird.

14. Computerprogramm mit Programmcode-Mitteln, um alle Schritte gemäß einem der Ansprüche 7 bis 12 durchführen zu können, wenn das Programm auf einem maschinenlesbaren Datenträger gespeichert ist.

15. Computerprogramm-Produkt mit auf einem maschinenlesbaren Träger gespeicherten Programmcode-Mitteln, um alle Schritte gemäß einem der Ansprüche 7 bis 12 durchführen zu können, wenn das Programm auf einem Computer oder einem digitalen Signalprozessor ausgeführt wird.

## Claims

1. Message analysis device (35) for analysing causally related, modularly constructed messages from a quantity of messages of a data stream, the message analysis device (35) comprising a storage device (36) for storing messages and the messages being stored in a file (37) of the storage device (36) in chronological sequence,
the message analysis device (35) comprising a display device (42) for displaying at least a first, a second window and a third window (6, 7, 8) and, in the first window (6), a part of the messages stored chronologically in the file being displayed and the message analysis device comprising a selection device (41) for selecting at least one message (25) of a parent generation, which is to be displayed in a first region (7.1) of the second window (7) of the display device (42), and a message (26) of a child generation of a specific message (24, 24' 24"), which is to be displayed in a second region (7.2) of the second window (7), the specific message (24, 24' 24") being triggered causally by the message (25) of the parent generation and, for its part, triggering the message (26) of the child generation causally and being displayed highlighted in the first window. (6) and a hierarchical system of the specific message (24, 24' 24") being displayed simultaneously in the third window (8), the display of the hierarchical system of a message concerning the inner modular construction of a message.

2. Message analysis device according to claim 1,
**characterised in that**
at least one message (31) of the generation succeeding the child generation is selectable by the selection device (41) in addition to a message (30.1) of the child generation, which message (31) is triggered causally by the message (30.1) of the child generation.

3. Message analysis device according to claim 1 or 2,
**characterised in that**
at least one message (33) of the generation preceding the parent generation is selectable by the selection device (41) in addition to a message (32) of the parent generation, which message (33) is a causally triggering message (33) for the message (32) of the parent generation.

4. Message analysis device according to claim 2 or 3,
**characterised in that**
the messages (32, 31) of succeeding generations are displayed indented in order to display the relationship of the messages (33, 30, 30.1) to their respective generation.

5. Message analysis device according to one of the claims 1 to 4,
**characterised in that**,
in the case of a selection of a message (25, 26, 30, 30.1, 31, 32, 33), displayed in the second window (7), that portion of chronological messages of the file is displayed in the first window (6), which portion contains the selected message (25, 26, 30, 30.1, 31, 32, 33).

6. Message analysis device according to claim 5,
**characterised in that**
the selected message (25, 26, 30, 30.1, 31, 32, 33) can be interpreted by the selection device (41) as a new, specific message and the display can be updated correspondingly in the second window (7).

7. Method for analysing causally related, modularly constructed messages of a data stream which are stored in a file, the messages being stored in the file corresponding to their temporal sequence, having the following method steps using a computer or digital signal processor:
- highlighting a selected message (24, 24', 24") in a first window (6) in which the messages are listed in chronological sequence;
- evaluation of header information of the highlighted message (24, 24', 24") and establishing whether at least one message (25) of a parent generation relating to the highlighted message (24, 24', 24") exists, which message (25) has triggered the highlighted message (24, 24', 24") causally, and whether at least one message (26) of a child generation exists which was triggered causally by the highlighted message (24, 24', 24"); and
- displaying such a message (25, 26) of the parent generation in a first region (7.1) of a second window (7) and such a message of the child generation in a second region (7.2) of the second window (7) and simultaneously
- displaying a hierarchical system of the highlighted message (24, 24' 24") in a third window (8), the display of the hierarchical system of a message concerning the inner modular construction of a message.

8. Method according to claim 7,
**characterised in that**,
in addition to a displayed message (30.1) of the child generation, at least one message (31) of the generation succeeding the child generation is displayed, which message (31) is connected causally to the displayed message (30.1) of the child generation.

9. Method according to claim 7 or 8,
**characterised in that,**
in addition to a displayed message of the parent generation (32), at least one message (33) of the generation preceding the parent generation is displayed, which message (33) is connected causally to the displayed message (32).

10. Method according to claim 8 or 9,
**characterised in that**
the messages (31, 32) of a succeeding generation, displayed in the second window (7), are made clear with respect to the messages (30.1, 33) of the preceding generation, in particular by indented display of the messages of the succeeding generation (31, 32).

11. Method according to one of the claims 7 to 10,
**characterised in that**,
upon selecting one of the messages (25, 26, 30, 30.1, 31, 32, 33), displayed in the second window (7), in the first window (6), such a part of the chronological sequence of messages is displayed which contains the message (25, 26, 30, 30.1, 31, 32, 33) selected in the second window (7), and the selected message (25, 26, 30, 30.1, 31, 32, 33) is highlighted in the first window (6).

12. Method according to one of the claims 7 to 11,
**characterised in that**
the method steps are repeated upon a change of the highlighted message (24, 24', 24") in the first window (6).

13. Computer programme with programme code means in order to be able to implement all the steps according to one of the claims 7 to 12 when the programme is executed on a computer or on a digital signal processor.

14. Computer programme with programme code means in order to be able to implement all the steps according to one of the claims 7 to 12 when the programme is stored on a machine-readable data carrier.

15. Computer programme product with programme code means stored on a machine-readable carrier in order to be able to implement all the steps according to one of the claims 7 to 12 when the programme is executed on a computer or on a digital signal processor.

## Revendications

1. Dispositif d'analyse de messages (35) pour l'analyse de messages cohérents au niveau de la cause et à structure modulaire à partir d'une quantité de messages d'un flux de données, le dispositif d'analyse de messages (35) comprenant un dispositif de stockage (36) pour le stockage de messages et les messages étant stockés dans un fichier (37) du dispositif de stockage (36) dans l'ordre chronologique,
le dispositif d'analyse de messages (35) comprenant un dispositif de représentation (42) pour l'affichage d'au moins une première, une seconde et une troisième fenêtres (6, 7, 8) et une partie des messages stockés de façon chronologique dans le fichier étant représentée dans la première fenêtre (6) et le dispositif d'analyse de messages comprenant un dispositif de sélection (41) pour la sélection d'au moins un message (25), à afficher dans une première zone (7.1) de la seconde fenêtre (7) du dispositif de représentation (42), d'une génération de parents et d'un message (26), à afficher dans une seconde zone (7.2) de la seconde fenêtre (7), d'une génération enfant d'un message (24, 24', 24'') défini, le message (24, 24', 24") défini étant déclenché au niveau de la cause par le message (25) de la génération parents et déclenchant pour sa part le message (26) de la génération enfant au niveau de la cause et étant représenté et repéré dans la première fenêtre (6) et un système hiérarchique du message (24, 24', 24'') défini étant affiché dans la troisième fenêtre (8) dans le même temps, sachant que, en ce qui concerne la présentation du système hiérarchique d'un message, il s'agit de la structure interne et modulaire d'un message.

2. Système d'analyse de messages selon la revendication 1,
**caractérisé en ce que**
le dispositif de sélection (41) peut sélectionner, en supplément d'un message (30.1) de la génération enfants, au moins un message (31) de la génération suivant la génération enfants, qui est déclenché au niveau de la cause par le message (30.1) de la génération enfants.

3. Dispositif d'analyse de messages selon la revendication 1 ou 2,
**caractérisé en ce que**
le dispositif de sélection (41) peut sélectionner, en supplément d'un message (32) de la génération parents, au moins un message (33) de la génération précédant la génération enfants, qui est un message (33) déclencheur au niveau de la cause pour le message (32) de la génération parents.

4. Dispositif d'analyse de messages selon la revendication 2 ou 3,
**caractérisé en ce que**,
pour l'affichage de l'appartenance des messages (33, 30, 30.1) à leur génération spécifique, les messages (32, 31) de générations consécutives sont représentés en retrait.

5. Dispositif d'analyse de messages selon l'une quelconque des revendications 1 à 4,
**caractérisé en ce que**,
lors d'une sélection d'un message (25, 26, 30, 30.1, 31, 32, 33), présenté dans la seconde fenêtre (7), la partie de messages chronologiques du fichier est présentée dans la première fenêtre (6) qui contient le message (25, 26, 30, 30.1, 31, 32, 33) choisi.

6. Dispositif d'analyse de message selon la revendication 5,
**caractérisé en ce que**
le message (25, 26, 30, 30.1, 31, 32, 33) sélectionné peut être interprété comme nouveau message défini et la représentation dans la seconde fenêtre (7) peut être actualisée en conséquence.

7. Procédé pour l'analyse de messages, cohérents au niveau de la cause et structurés de façon modulaire, d'un flux de données, qui sont stockés dans un fichier, les messages étant stockés en fonction de leur succession dans le temps dans le fichier, présentant les étapes de procédé suivantes avec l'utilisation d'un ordinateur ou d'un processeur de signal numérique:
- marquage d'un message (24, 24', 24'') sélectionné dans une première fenêtre (6), dans laquelle les messages sont listés dans l'ordre chronologique:
- analyse d'informations d'en-tête du message (24, 24', 24'') marqué et vérification du fait que, pour le message (24, 24', 24'') marqué, il existe au moins un message (25) d'une génération parents qui a déclenché au niveau de la cause le message (24, 24', 24'') marqué et qu'il existe au moins un message (26) d'une génération enfants qui a été déclenché au niveau de la cause par le message (24, 24', 24'') marqué; et
- affichage d'un tel message (25, 26) de la génération parents dans une première zone (7.1) d'une seconde fenêtre (7) et d'un tel message de la génération enfant dans une seconde zone (7.2) de la seconde fenêtre (7) et en même temps
- présentation d'un système hiérarchique du message (24, 24', 24'') marqué dans une troisième fenêtre (8), sachant que, en ce qui concerne la présentation du système hiérarchique d'un message, il s'agit de la structure interne et modulaire d'un message.

8. Procédé selon la revendication 7,
**caractérisé en ce que**,
en supplément d'un message (30.1) affiché de la génération enfant, on affiche au moins un message (31) de la génération qui suit la génération enfant, qui est en rapport de cause à effet avec le message (30.1) affiché de la génération enfants.

9. Procédé selon la revendication 7 ou 8,
**caractérisé en ce que**,
en supplément d'un message affiché de la génération parents (32), on affiche au moins un message (33) de la génération précédant la génération parents qui est en rapport de cause à effet avec le message (32) affiché.

10. Procédé selon la revendication 8 ou 9,
**caractérisé en ce que**
les messages (31, 32), affichés dans la seconde fenêtre (7), d'une génération suivante sont identifiés par rapport aux messages (30.1, 33) de la génération précédente, en particulier par une représentation en retrait des messages de la génération suivante (31, 32).

11. Procédé selon l'une quelconque de la revendication 7 à 10,
**caractérisé en ce que**
lors de la sélection de l'un des messages (25, 26, 30, 30.1, 31, 32, 33) affichés dans la seconde fenêtre (7), on affiche dans la première fenêtre (6) une partie de la succession chronologique des messages qui contient les messages (25, 26, 30, 30.1, 31, 32, 33) sélectionnés dans la seconde fenêtre (7) et le message (25, 26, 30, 30.1, 31, 32, 33) sélectionné est repéré dans la première fenêtre (6).

12. Procédé selon l'une quelconque de la revendication 7 à 11,
**caractérisé en ce que**
les étapes du procédé sont répétées lors d'un changement du message (24, 24', 24'') repéré dans la première fenêtre (6).

13. Programme informatique avec des moyens de code de programme pour pouvoir effectuer toutes les étapes selon l'une quelconque des revendications 7 à 12, lorsque le programme est exécuté sur un ordinateur ou un processeur de signal numérique.

14. Programme informatique avec des moyens de protocole de programme pour pouvoir effectuer toutes les étapes selon l'une quelconque des revendications 7 à 12, lorsque le programme est stocké sur un support de données pouvant être lu à la machine.

15. Produit de programme informatique avec des moyens de code de programme mémorisés sur un support pouvant être lu à la machine, afin de pouvoir mettre en oeuvre toutes les étapes selon l'une quelconque des revendications 7 à 12, lorsque le programme est exécuté sur un ordinateur ou un processeur de signal numérique.
